# EUROPEAN PATENT APPLICATION

(11) **EP 2 722 951 A2**
(43) Date of publication of application: **23.04.2014**
(21) Application number: 13187996.7
(22) Date of filing: 10.10.2013
(51) Int. Cl.: H02G 3/14

(54) **Cover part for electric installation material**

(30) Priority: 17.10.2012 BE 201200700
(71) Applicant: Niko NV, 9100 Sint-Niklaas (BE)
(72) Inventor: Feng, De Run, 200052 Shanghai (CN); Yang, Ching-Hsiung, 200052 Shanghai (CN); Nie, Ling Yun, 200052 Shanghai (CN)
(74) Representative: D'Halleweyn, Nele Veerle Trees Gertrudis

(57) **Abstract**

Cover part for electric installation material such as a switch, a push-button or a wall socket, comprising a plate-like upper part of a light-transmitting material; and a plate-like lower part; wherein a reflective layer is formed at least on a boundary surface between the upper and the lower part for the purpose of reflecting light entering the cover part via the plate-like upper part; wherein the lower part and the upper part are fixed to each other to form an integral cover part.

## Description

The present invention relates to a cover part for electric installation material such as a switch, a dimmer or a wall socket, and to a method for manufacture thereof. The invention relates more particularly to a cover frame for electric installation material and to a method for manufacture thereof.

It is known to manufacture cover parts, in particular cover frames for installation material such as switches, from plastic, and particularly by injection moulding. Decorative cover plates are further known in which a removable decorative plate can be placed behind a transparent cover frame or inserted into a transparent cover frame.

The present invention has for its object to provide a cover part which is mountable in simple manner over electric installation material, typically flush-mounted material, which cover part is formed integrally and allows a decorative appearance to be imparted to the cover part.

According to a first aspect of the invention, a cover part is distinguished for this purpose in that it comprises a plate-like upper part of a light-transmitting material and a plate-like lower part. A reflective layer is formed at least on a boundary surface between the upper and the lower part for the purpose of reflecting light entering the cover part via the plate-like upper part. The upper part and the lower part are fixed to each other, for instance by means of glueing, to form an integral cover part.

By providing such a reflective layer inside the cover part light enters the cover part and is reflected in the cover part such that a special appearance can be imparted to the cover part. In addition, such an embodiment has the advantage that the light is reflected inside the cover part, whereby fingermarks and the like on the cover part are less easily visible. Such an embodiment thus enables a cover part with a flat outer side (i.e. the upper side of the upper part) to nevertheless be given a decorative appearance.

According to an advantageous embodiment, the upper part has a lower surface with a shape complementary to the shape of the upper surface of the lower part. The reflective layer then preferably extends over the whole lower surface of the upper part and can for instance be arranged against this lower surface. According to another option the lower part is manufactured, at least in a layer adjacent to the boundary surface, from a reflective material, for instance a plastic material incorporating metal particles, in order to form the reflective layer. The lower surface preferably has a profiling whereby the light reflection is further influenced and special decorative effects can be obtained. The lower surface can for instance have a wave-like profiling.

It is noted that the lower part can be a part manufactured wholly from the same material as well as a combination of a number of parts attached to each other to form the lower part.

According to an advantageous embodiment, the plate-like upper and lower parts are both frame-like for the purpose of forming a cover frame. Such cover frames are particularly suitable for flush-mounted switches, dimmers, socket outlets and the like, where a central plate is used on which a knob is for instance provided which fits in the cover frame.

The lower and upper parts are preferably manufactured from a plastic material, the lower part is preferably not light-transmitting. The reflective layer can for instance be one of the following: a metal coating, a paint (laquer) such as a paint with metal particles, for instance for the purpose of obtaining special magnetic properties, a layer of reflective shell material and so on. In the case of a coating or a paint, this is preferably applied to an underside of the upper part, after which the upper part can be fixed against the lower part using for instance a glue. This avoids the glue layer being visible when a person looks through the upper part.

The reflective layer preferably has a light reflective value of more than 5% for visible light incident via the upper part. This light reflective value is preferably more than 20%, and for instance between 25% and 70%. Note that the reflection will typically also be a function of the type of lower surface against which the reflective layer is provided, and of the colour of the layer.

Provided according to a second aspect of the invention is a cover part for electric switch material, in particular built-in material, with a plate-like upper part of a first light-transmitting material and a plate-like lower part of a second material which transmits less or no light. The upper part has a lower surface with a first profiling and the lower part has an upper surface with a complementary second profiling, such that the upper part fits onto the lower part. Special decorative effects can in this way also be obtained as a result of light being reflected at the boundary area between the upper and the lower part and as a result of the profiling at the position of this boundary area.

According to a possible embodiment, the profiling comprises protruding parts such as ribs which are arranged in a determined pattern on the upper surface of the lower part.

Just as according to the first aspect of the invention, the upper and lower parts are preferably also manufactured according to a second aspect of the invention from a plastic material, and these parts are preferably frame-like such that a cover frame is obtained.

Provided according to a third aspect of the invention is a cover part for electric installation material with a plate-like upper part of a first light-transmitting material and a plate-like lower part of a second material which transmits less light than the first material. An underside of the upper part and/or an upper side of the lower part are shaped such that at least one hollow space is formed between the upper and the lower part. The upper part preferably connects along the whole outer periphery thereof to and is fixed against the lower part. Including a hollow space between the upper part and the lower part can create the illusion that a relief is present in the outer side of the cover part, while in reality the relief is the result of the hollow space inside the cover part. This allows special decorative effects to nevertheless be imparted to the cover part even when the upper part of the cover part has a substantially flat upper side.

According to an advantageous embodiment hereof, the upper part connects along its whole outer periphery and along its whole inner periphery to the lower part. This avoids the possibility of contamination occurring in the hollow space. The upper and the lower part are further preferably manufactured from a plastic material and the cover part is preferably frame-like.

According to a possible variant, the at least one hollow space, for instance a set of grooves, is arranged in an underside of the upper part and a coloured material, typically a paint, is arranged in this hollow space. This hollow space is typically only partially filled with the coloured material.

According to a fourth aspect of the invention, a method is provided for manufacturing a plate-like cover part for installation material. A flexible carrier is adhered here to a plate-like part manufactured from plastic, wherein this part is configured to form a cover part for installation material. According to a possible embodiment, the method comprises of: arranging a plastic material in a mould so as to form the plate-like part; partially curing the plastic material; and arranging the flexible carrier over the partially cured plastic material such that the flexible carrier fuses with and adheres to the plastic material. The flexible carrier can be cut to size such that it extends only on the upper side of the cover part, but can also be folded over the sides of the cover part. According to another option, the flexible carrier is arranged in a mould. A plastic material is poured or injected over the flexible carrier arranged in the mould. The plastic material is then allowed to cure and adhere to the flexible carrier in order to form an integral plate-like cover part. Such a method has the advantage that cover parts with a decorative outer side can be manufactured. Numerous decorative carriers can after all be used as flexible carrier.

According to an advantageous embodiment, the mould and the flexible carrier are frame-like such that a frame-like cover part is formed.

The flexible carrier can for instance be one of the following: a web, for instance a fabric; a film; a sheet material; a membrane.

According to yet another aspect of the invention, a cover part is provided comprising a flexible carrier and a plate-like plastic part. The flexible carrier is mounted on an upper side of the plastic part so as to form a decorative layer on the cover part. Such a cover part is preferably manufactured according to an embodiment of the above described method.

Provided according to a fifth aspect of the invention is a cover part with a plate-like part for the purpose of forming an outer side of the cover part. The plate-like part is processed, for instance punched and/or anodized and/or milled and/or digitally printed, on its outer side according to a determined pattern. Advantageous decorative effects can be obtained by processing in differing manner in accordance with a determined pattern. The plate-like part is typically manufactured from metal, but could also be manufactured from plastic in the case of milling and/or digital printing. In addition, such a pattern has the advantage that fingermarks and the like will not be easily visible on the cover part. The pattern preferably comprises a large number of surfaces punched or milled to different depths. These surfaces can further be anodized in differing manner. In this embodiment the cover part is preferably also frame-like.

Finally, the invention relates to an assembly comprising an embodiment of a cover part as described above, a base with a metal frame which is mountable against a wall and provided with an electrical build-in functionality such as terminals of a wall socket or electronic components of a switch or dimmer. The lower part of the cover part is preferably configured to be releasably mountable on the base. The base and the cover part can for instance be configured such that the cover part can be snapped fixedly onto the base.

According to an advantageous embodiment, the cover part is frame-like and the assembly further comprises a central part which fits into the opening of the cover part and which is configured for mounting on the base. The central part can for instance be a central plate with a knob or a central plate for a socket outlet.

The present invention will be further elucidated on the basis of a number of by no means limitative embodiments of a cover part and a method for manufacturing a cover part according to the invention, with reference to the accompanying drawings, in which:
Figure 1 is a perspective view of a first embodiment of a cover part according to the invention;
Figure 2 is a perspective view of a second embodiment of a cover part according to the invention;
Figure 3 is a perspective view of a third embodiment of a cover part according to the invention;
Figures 4A and 4B are perspective views of a fourth embodiment of respectively a cover part according to the invention and the lower and upper parts thereof before they are attached to each other;
Figure 5 is a perspective view of a fifth embodiment of a cover part according to the invention;
Figure 6 is a perspective view of a sixth embodiment of a cover part according to the invention;
Figure 7 is a perspective view of a seventh embodiment of a cover part according to the invention;
Figure 8 is a perspective view of an eighth embodiment of a cover part according to the invention;
Figure 9 is a perspective view of a ninth embodiment of a cover part according to the invention;
Figure 10 is a perspective view of a tenth embodiment of a cover part according to the invention;
Figure 11 is a perspective view of an eleventh embodiment of a cover part according to the invention; and
Figure 12 is a schematic illustration of an assembly according to the invention.

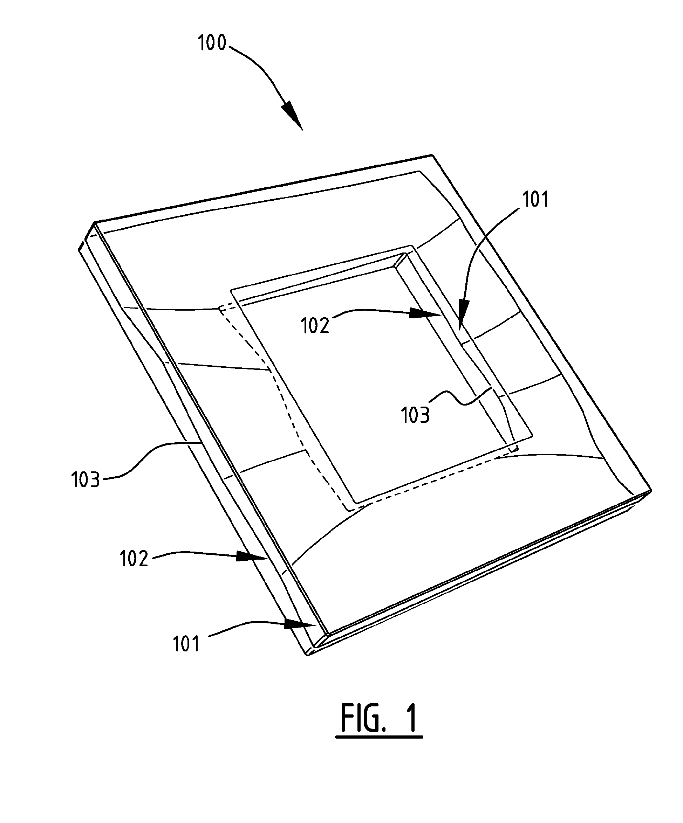

Figure 1 illustrates a first embodiment of a cover part according to the invention with an upper part 101 and a lower part 102. Upper part 101 is manufactured from a light-transmitting material, for instance a transparent plastic. Lower part 102 is manufactured from a non-transparent plastic. Arranged between upper part 101 and lower part 102 is a reflective layer 103, for instance in the form of a metal coating applied against the underside of the upper part, after which the upper part is fixed against the lower part, for instance by glueing. Both the lower and the upper part are frame-like and the reflective layer extends over the whole lower surface of upper part 101. As illustrated, the upper surface of lower part 102 can have a wave-like profiling. The lower surface of upper part 101 has a complementary shape such that upper part 101 fits closely onto lower part 102. In this way a user is under the impression that cover frame 100 has a wave-shaped upper side, while in reality the cover part has a flat upper side which is easy to clean.

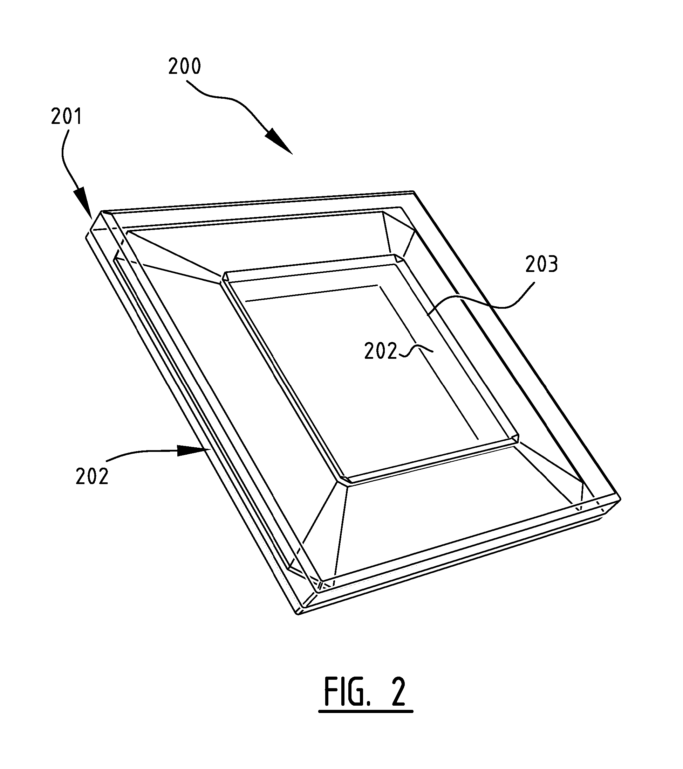

Figure 2 illustrates a variant of the embodiment of figure 1 with an upper part 201 of a transparent plastic and a lower part 202 of a non-transparent plastic material. Lower part 202 is embodied here as a frame with inward rising walls, and the upper part has the negative shape thereof so that the upper and lower parts fit to each other over their whole boundary surface. A user is thus also under the impression here that the cover frame has a special shape, while in reality the upper side of upper part 201 is flat.

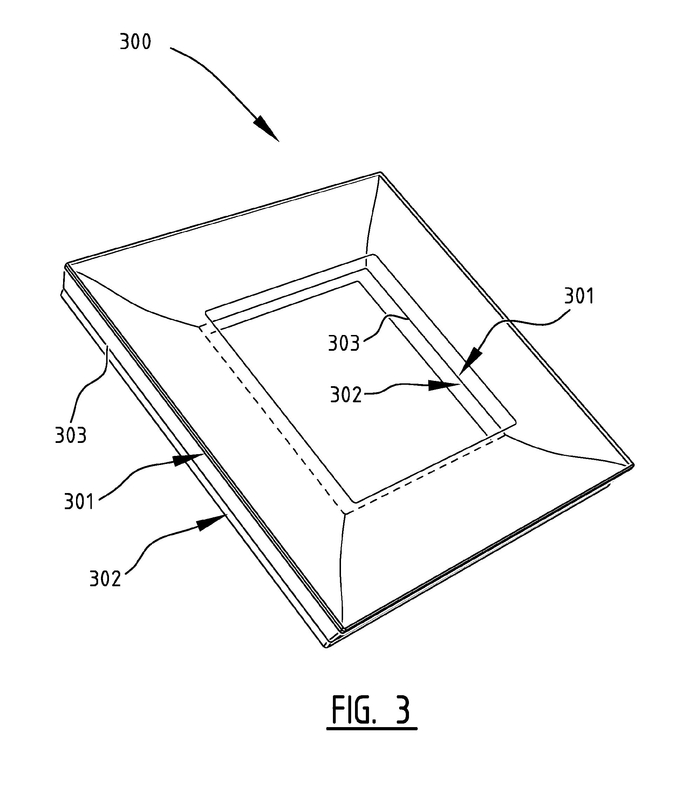

Figure 3 illustrates yet another variant which is similar to the variant of figure 2, with the difference that the upper surface of lower part 302 rises arcuately inward instead of rising in a flat plane. Upper part 301 is here also manufactured from a transparent plastic material, and a reflective layer 303 is arranged on lower part 302.

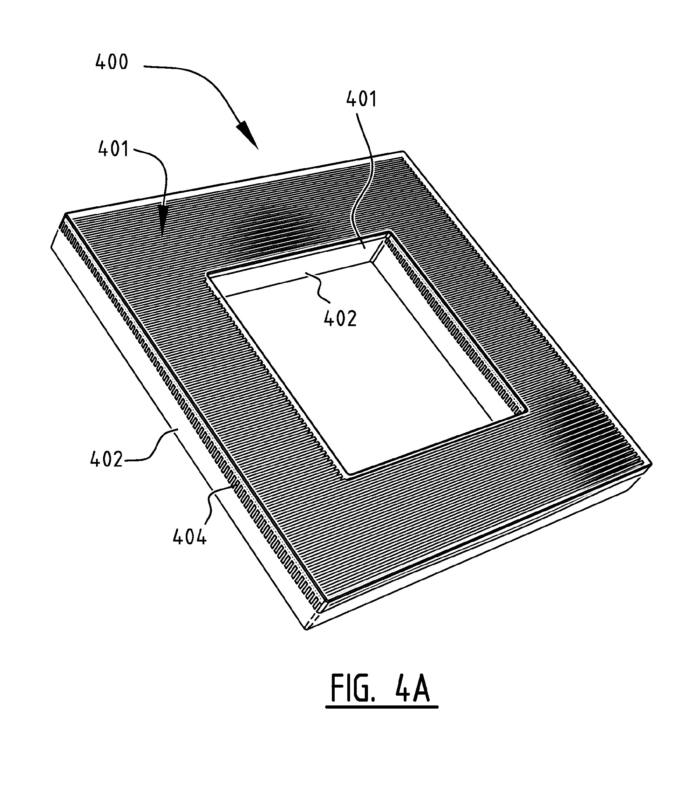

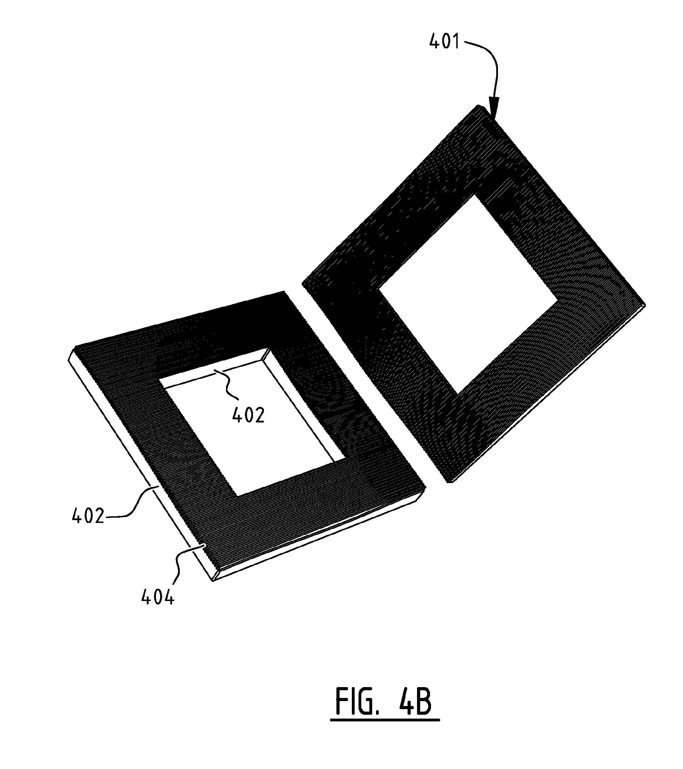

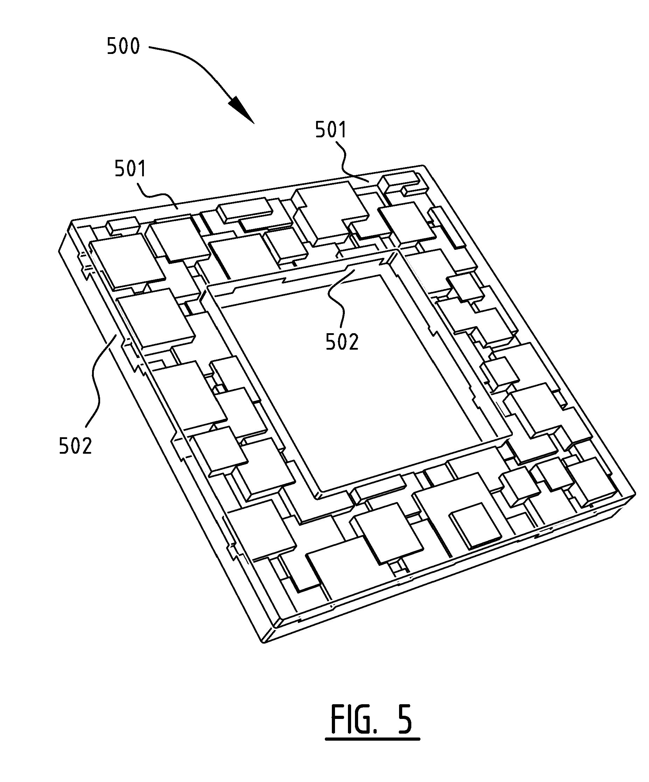

Figures 4A and B and figure 5 illustrate variants of cover parts according to the second aspect of the invention. In the variant of figures 4A and 4B cover part 400 comprises a lower frame 402 having on the upper surface thereof a profiling consisting of a number of ribs 404. Upper frame 401 is manufactured from a transparent plastic and has a lower surface with a complementary profiling such that upper frame 401 fits closely onto lower frame 402. Upper frame 401 is fixed to this lower frame 402.
Figure 5 illustrates another variant wherein, instead of a pattern of ribs 404, a pattern of block-like elements 504 is provided on the upper surface of lower frame 502. A transparent upper frame 501 is here also fixed against lower frame 502. Transparent upper frame 501 has on its underside a shape complementary to that of the upper side of lower frame 502.

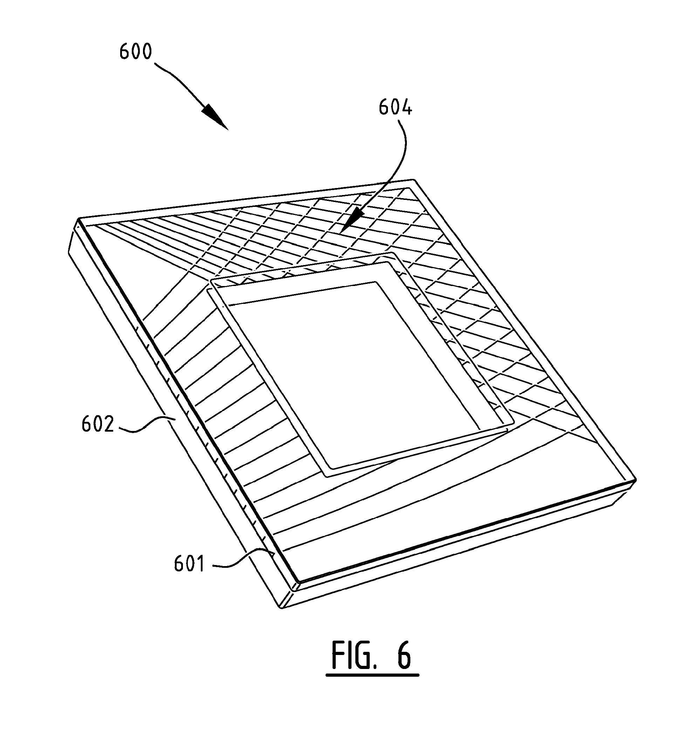

Figure 6 illustrates yet another embodiment of a cover part 600 with a lower frame 602 and an upper frame 601. In this embodiment the underside of upper frame 602 is provided with a pattern of lines 604 which is visible through upper frame 601. This pattern of lines is formed by arranging grooves in the underside of upper frame 602. A paint can optionally be arranged in these grooves. Upper frame 601 can for instance be manufactured from a transparent or semi-transparent plastic material, while lower frame 602 is manufactured from a non-transparent plastic material.

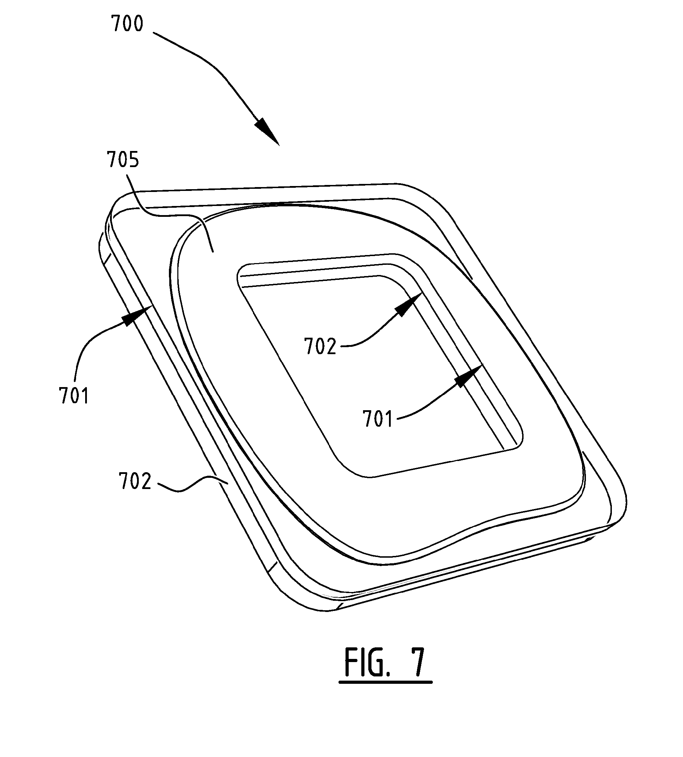

Figure 7 illustrates an embodiment of a cover part 700 according to the third aspect of the invention. Cover part 700 comprises an upper frame 701 and a lower frame 702. Upper frame 701 is provided on its underside facing toward lower frame 702 with a recess 705 such that a hollow space is formed between lower frame 702 and upper frame 701. Lower frame 702 fits closely onto upper frame 701 along the outer periphery and the inner periphery of cover frame 700 such no contaminants can penetrate into hollow space 705. A cover frame 700 is in this way created with an upper side which can be substantially flat, while a user gets the impression, as a result of the presence of the hollow space, that a relief is incorporated therein. Upper frame 701 can for instance take a transparent or semi-transparent form. The skilled person will further appreciate that, instead of one hollow space, a plurality of hollow spaces can also be provided between lower frame 702 and upper frame 701. It is further also possible to provide recesses in an upper surface of lower frame 702 instead of in a lower surface of upper frame 701.

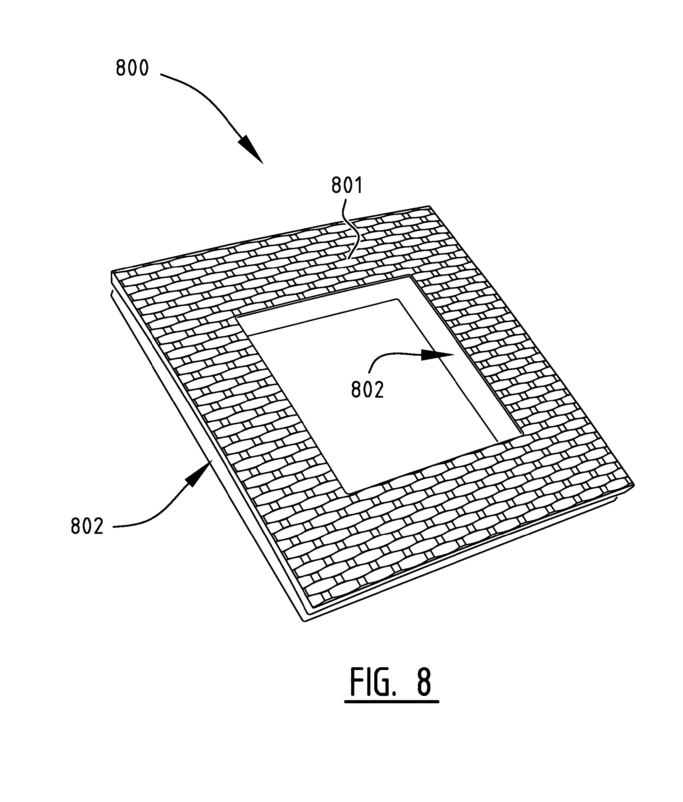

Figure 8 illustrates a cover part according to the fourth aspect of the invention. Cover part 800 is formed by adhering a flexible carrier 801 to a main plastic frame 802, for instance using one of the methods as elucidated above. Flexible carrier 801 and plastic material 802 are chosen such that flexible carrier 801 adheres to plastic frame 802 after complete curing of plastic material 802. The skilled person will appreciate that such a technique allows all manner of flexible carriers 801 to be arranged on cover frames, and that the invention is not limited to arranging a web as illustrated in figure 8. In the variant of figure 8 the carrier extends only on the upper side of the cover part, although the skilled person will understand that this carrier can also extend over the sides of the cover part.

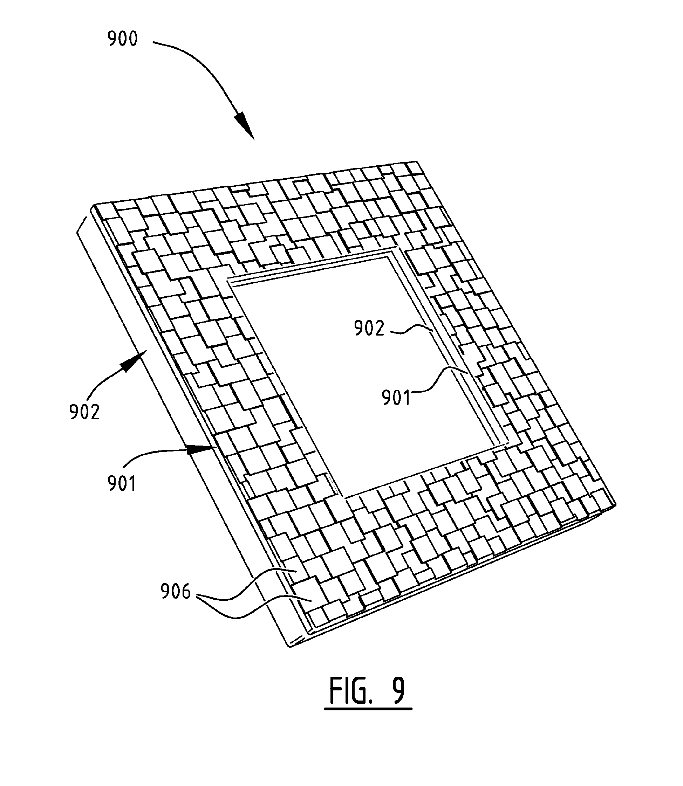

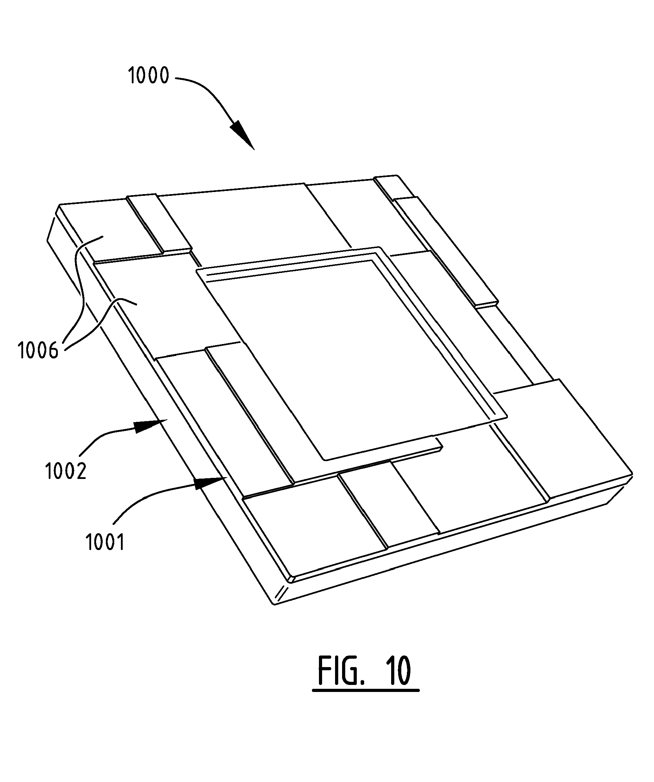

Figures 9 and 10 illustrate cover parts according to the fifth aspect of the invention. According to the variant of figure 9, cover part 9000 comprises an upper frame 901 of metal and a lower frame 902 of plastic. Upper frame 901 is fixed against lower frame 902. Upper frame 901 is provided on its outer side with a pattern of surfaces 906 which have been processed in a different way, for instance punched and anodized, in order to obtain a pattern. In the variant of figure 9 a very large number of surfaces 906 are provided. According to another option, which is illustrated in figure 10, cover part 1000 has an upper frame 1001 with a number of surfaces 1006 which are punched or milled to different depths. The number of surfaces is however smaller here than in the variant of figure 9. According to a variant, the outer side can be milled and digitally printed in a similar pattern. The upper frame can in this case also be manufactured from plastic.

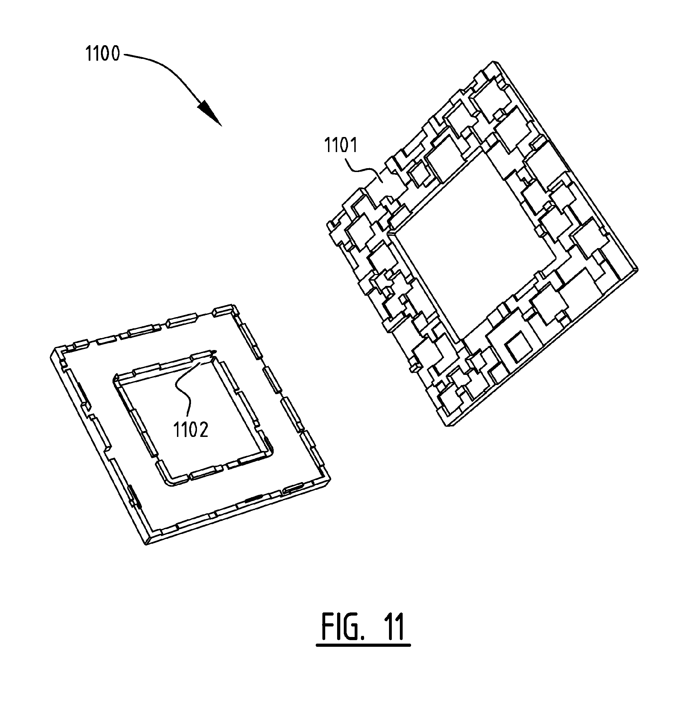

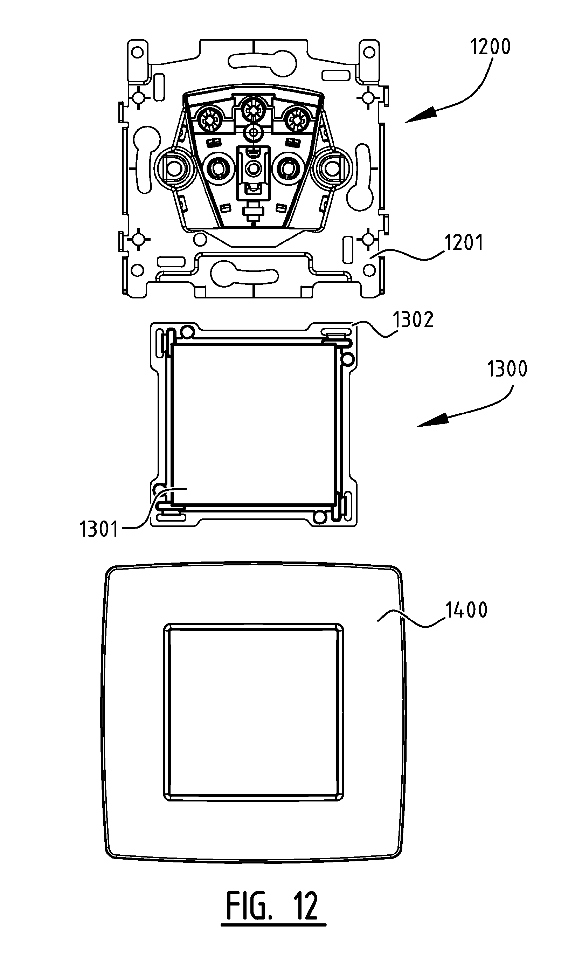

Figure 11 illustrates a variant of a cover part 1100 in which a number of techniques are combined. Cover part 1100 comprises an upper frame 1101 and a lower frame 1102. The upper side of lower frame 1102 is only partially complementary here to the upper frame, particularly along the outer and inner periphery thereof, such that hollow spaces are present between the upper and lower frames when the upper frame is fixed along its inner and outer periphery against the lower frame. A reflective layer can further optionally be provided on the upper surface of lower frame 1102. Finally, figure 12 illustrates an embodiment of an assembly according to the invention. The assembly comprises a cover plate 1400, base 1200 and a central plate 1300. Central plate 1300 is provided with a switch 1301 which is mounted on a frame 1302. Frame 1302 can be mounted against base 1200. Base 1200 is provided with an electrical build-in functionality, for instance a switch, and is intended to be built into the wall, wherein a metal frame 1201 of base 1200 is mounted against the wall. Cover part 1400 can for instance be embodied as described with reference to figures 1-11. Advantageously provided on the rear side of cover part 1400 are means which allow cover part 1400 to be snapped fixedly onto frame 1201. In order to install the assembly, base 1200 will typically first be fixed in the wall, after which central plate 1300 is mounted against base 1200. Cover frame 1400 is then snapped fixedly onto base 1200.

The skilled person will appreciate that the invention is not limited to the above illustrated exemplary embodiments, and that many variants and modifications can be envisaged within the scope of the invention, which is defined solely by the following claims.

## Claims

1. Cover part for electric installation material such as a switch, a push-button or a wall socket, comprising a plate-like upper part of a light-transmitting material; and a plate-like lower part; wherein a reflective layer is formed at least on a boundary surface between the upper and the lower part for the purpose of reflecting light entering the cover part via the plate-like upper part; wherein the lower part and the upper part are fixed to each other to form an integral cover part; **characterized in that** the upper part has a lower surface facing toward an upper surface of the lower part, wherein the shape of the lower surface is complementary to the shape of the upper surface.

2. Cover part as claimed in claim 1, **characterized in that** the lower surface has a profiling and that the upper surface has a complementary profiling.

3. Cover part as claimed in claim 2, **characterized in that** the lower surface has a wave-like profiling.

4. Cover part as claimed in any of the foregoing claims, **characterized in that** the reflective layer is one of the following: a metal coating, a reflective paint, a layer of shell material.

5. Cover part for electric switch material, comprising a plate-like upper part of a first light-transmitting material and a plate-like lower part of a second material which transmits less light, wherein the upper part has a lower surface with a profiling and the lower part has an upper surface with a complementary profiling, such that the upper part connects to the lower part; wherein the upper part is fixed against the lower part.

6. Cover part for electric installation material, comprising a plate-like upper part of a first light-transmitting material and a plate-like lower part of a second material which transmits less light, wherein an underside of the upper part and/or an upper side of the lower part are shaped such that at least one hollow space is formed between the upper part and the lower part.

7. Cover part as claimed in claim 6, **characterized in that** the at least one hollow space is arranged in an underside of the upper part, and that a coloured material, typically a paint, is arranged in this hollow space and at least partially fills this hollow space.

8. Cover part as claimed in claim 7, **characterized in that** the at least one hollow space is a set of grooves.

9. Cover part for electric installation material, comprising a flexible carrier and a plate-like plastic part, which flexible carrier is mounted on an upper side of the plastic part so as to form a decorative layer on the cover part.

10. Cover part for electric installation material, comprising a plate-like part for the purpose of forming an outer side of the cover part, **characterized in that** the plate-like part is processed on an upper surface according to a determined pattern; and
that the plate-like part is manufactured from metal.

11. Cover part as claimed in claim 10, **characterized in that** the plate-like part has undergone one or more of the following processes: punching, anodizing, milling, digital printing.

12. Cover part as claimed in claims 10-11, **characterized in that** the pattern is such that the plate-like part has a relief on the outer side.

13. Assembly, comprising:
- a cover part as claimed in any of the claims 1-8 or 9-12;
- a base with a metal frame which is mountable against a wall; which base is provided with an electrical build-in functionality such as terminals or a switch;
wherein the lower part of the cover part is configured to be removably mountable on the base.

14. Assembly as claimed in claim 13, **characterized in that** the base and the cover part are configured for the purpose of snapping the cover part fixedly onto the base.

15. Assembly as claimed in claim 13 or 14, **characterized in that** the cover part is frame-like and that the assembly further comprises a central part which fits into the opening of the cover part and which is configured for mounting on the base.
